# EUROPÄISCHE PATENTANMELDUNG

(11) **EP 1 318 326 A1**
(43) Veröffentlichungstag der Anmeldung: **11.06.2003**
(21) Anmeldenummer: 01129019.4
(22) Anmeldetag: 06.12.2001
(51) Int. Cl.: F16F 15/32

(54) **Wuchtgewichtstrang zum Auswuchten von Fahrzeugrädern**

(71) Anmelder: Bettchen, Uwe, 42579 Heiligenhaus (DE); Bettchen, David, 42579 Heiligenhaus (DE)
(72) Erfinder: Bettchen, Uwe, 42579 Heiligenhaus (DE); Bettchen, David, 42579 Heiligenhaus (DE); Drösser, Peter, 47800 Krefeld (DE)
(74) Vertreter: Kern, Wolfgang, Dipl.-Ing.

(57) **Zusammenfassung**

Wuchtgewichtstrang zum Auswuchten von Fahrzeugrädern und Felgen, bestehend aus mehreren selbstklebenden, metallischen Auswuchtgewichten. Die Verwendung von Blei für die Wuchtgewichte stößt in zunehmendem Maße aus Umweltschutzgründen auf Widerstand beteiligter Kreise, so daß nicht ausgeschlossen werden kann, daß diese Verwendung zukünftig gänzlich untersagt wird. Daher soll ein Wuchtgewichtstrang geschaffen werden, der insbesondere hinsichtlich Wuchtgewicht und Anpaßbarkeit an Rad- bzw. Felgenkrümmungen, also hinsichtlich seiner Verformbarkeit dem bisher verwendeten Blei zumindest nahekommt und trotzdem metallischer Art ist. Zu diesem Zweck wird vorgeschlagen, daß der Strang als Gliederband (1) ausgebildet ist, bestehend aus auf einem Trägerband (3) aufeinanderfolgend angebrachten separaten Metallplatten oder -plättchen (2), deren Breite und Länge wesentlich größer sind als ihre Dicke.

## Beschreibung

Die Erfindung betrifft einen Wuchtgewichtsstrang zum Auswuchten von Fahrzeugrädern und -felgen, bestehend aus mehreren selbstklebenden, metallischen Auswuchtgewichten.

Ein solcher Strang ist beispielsweise aus dem deutschen Gebrauchsmuster 298 05 452 bekannt und dort als Flachstab ausgebildet, dessen Dicke wesentlich geringer ist als die Breite und der zur Bildung von Sollbruchstellen mit quer zu den Längskanten des Flachstabs verlaufenden, sowie einander gegenüberliegenden Einkerbungen versehen ist, um das Abbrechen von Auswuchtgewichten ohne Zuhilfenahme eines Werkzeuges zu ermöglichen, wobei je nach Größe des erforderlichen Wuchtgewichtes eine entsprechende Länge von dem Strang abgebrochen werden kann.

Ein derartiger Strang besteht üblicherweise aus Blei, wobei die Abstände der Einkerbungen so gewählt werden, daß beispielsweise das zwischen zwei Einkerbungen liegende Wuchtgewicht einige Gramm beträgt. Dabei ist sichergestellt, daß die Dicke des Strangs bzw. der Wuchtgewichte wesentlich geringer als die Breite, so daß die Wuchtegewichte nach ihrem Einbau in das Rad bzw. die Felge an keinen sonstigen Bauteilen, beispielsweise den Bremsbacken oder Bremssätteln, anstoßen.

Die Verwendung von Blei für die Wuchtgewichte stößt in zunehmendem Maße aus Umweltschutzgründen auf Widerstand beteiligter Kreise, so daß nicht ausgeschlossen werden kann, daß diese Verwendung zukünftig gänzlich untersagt wird.

Die Aufgabe der Erfindung besteht deshalb darin, einen Wuchtgewichtsstrang zu schaffen, der insbesondere hinsichtlich Wuchtgewicht und Anpaßbarkeit an Rad- bzw. Felgenkrümmungen, also hinsichtlich seiner Verformbarkeit dem bisher verwendeten Blei zumindest nahekommt und trotzdem metallischer Art ist.

Zu diesem Zweck wird erfindungsgemäß vorgeschlagen, daß der Strang als Gliederband ausgebildet ist, bestehend aus auf einem Trägerband aufeinanderfolgend angebrachten Metallplatten oder -plättchen als Glieder, deren Breite B und Länge L wesentlich größer sind als ihre Dicke D.

Bei einem derartigen Gliederband ist also der bisher verwendete Flachstab gewissermaßen aufgelöst in einzelne Teile, die durch ein Trägerband miteinander verbunden sind, wodurch der Zusammenhang dieser Teile als bandförmige Konfiguration, jedoch auch die Verformbarkeit des Strangs insgesamt gewährleistet werden. Diese Verformbarkeit ist, abgesehen davon, daß das Trägerband nicht starr, sondern elastisch ist, darauf zurückzuführen, daß die im Vergleich zum Blei sehr viel härteren und festeren Metallplatten oder -plättchen in Bezug aufeinander an ihren Stoßkanten in Bandlängsrichtung bewegt werden können, wobei insbesondere die Möglichkeit besteht, von einem derartigen Wuchtgewichtsstrang Gliederbandabschnitte abzuschneiden, die dem gewünschten Wuchtgewicht entsprechen.

Vorteilhafte Ausgestaltungen der Erfindung sind in den Unteransprüchen gekennzeichnet. Unter ihnen ist besonders hervorzuheben, daß die in Bandlängsrichtung aufeinanderfolgenden Metallplatten oder -plättchen einen Mindestabstand A voneinander aufweisen, der ihre Beweglichkeit in Bezug aufeinander zur Bildung von gekrümmten Gliederbandabschnitten gewünschter Länge und damit gewünschten Wuchtgewichtes sowie das Abtrennen solcher Abschnitte mit Hilfe eines geeigneten Werkzeugs ohne weiteres ermöglicht.

Darüber hinaus läßt sich das Trägerband für die metallischen Glieder oder Metallplatten bzw. -plättchen beidseitig mit einem Kleber versehen, so daß auf der einen Bandseite die einzelnen Glieder aufgeklebt sind und auf der anderen Seite eine abziehbare Schutzfolie die Klebschicht abdeckt, um die Handhabung des Wuchtgewichtsstrangs zu erleichtern, ohne die Beweglichkeit der einzelnen Glieder in Bezug aufeinander zu beeinträchtigen.

Die Erfindung wird nachfolgend anhand des in der Zeichnung dargestellten Ausführungsbeispiels näher erläutert. In der Zeichnung zeigen:
- Fig. 1: eine Draufsicht des erfindungsgemäßen Gliederbandes,
- Fig. 2: eine Seitenansicht des Gliederbandes von Fig. 1,
- Fig. 3: Draufsicht und Stirnansicht eines metallenen Gliedes des Gliederbandes und
- Fig. 4: eine Seitenansicht eines von dem Gliederband von Fig. 1 gelösten Abschnittes, dessen Krümmung an die Oberflächenkrümmung angepaßt ist, an der das Auswuchtgewicht verwendet werden soll, also beispielsweise eine Radfelgenoberfläche.

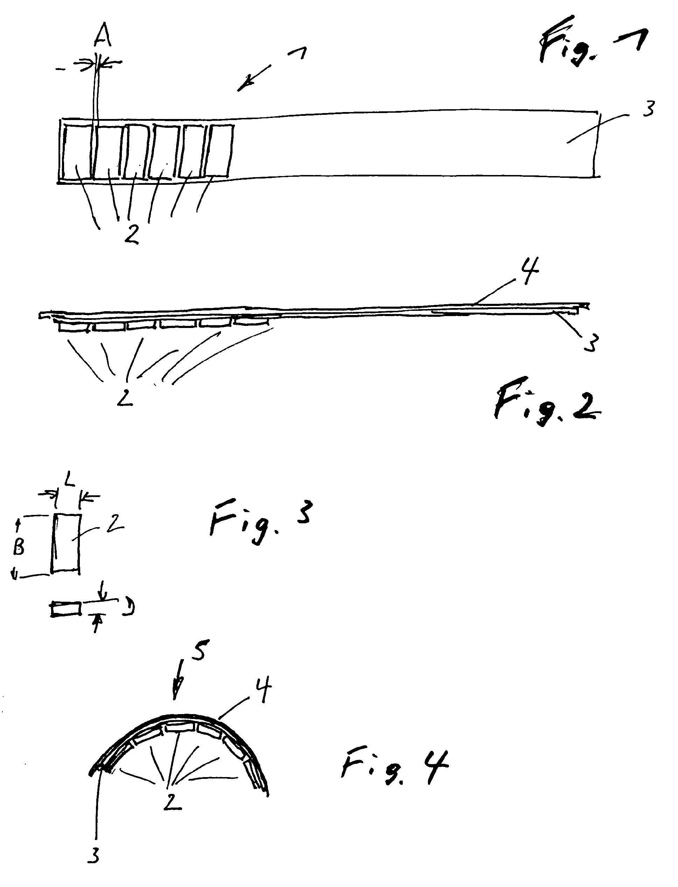

Aus der in Fig. 1 dargestellten Draufsicht eines erfindungsgemäßen Gliederbandes 1 ist in Verbindung mit der Darstellung von Fig. 2 ersichtlich, daß dieses Band ein Trägerband 3 aufweist, auf dessen einer Seite Wuchtgewichte 2 in Form von rechteckigen Metallplatten oder -plättchen angebracht sind und dessen andere oder Rückseite mit einer Schutzfolie 4 versehen ist. Zu diesem Zweck ist das Trägerband 3 beidseitig mit einem Kleber versehen, auf dem die Glieder oder Metallplatten bzw. -plättchen 2 einerseits haften und andererseits die Schutzfolie 4. Die Metallplatten bzw. -plättchen bestehen aus einem relativ harten, festen Material, beispielsweise Zink, dessen Verformbarkeit unter normalen Bedingungen erheblich geringer ist, als diejenige von Blei. Die Metallplatten bzw. -plättchen 2 sind auf dem Trägerband 3 aufeinanderfolgend in einem relativ geringen Abstand A voneinander angeordnet und weisen eine Breite B sowie eine Länge L auf, die wesentlich größer sind als ihre Dicke D, wie insbesondere aus Fig. 3 ersichtlich.

Der Abstand A ist ein Mindestabstand, der die Beweglichkeit der Metallplatten oder -plättchen 2 in Bezug aufeinander zur Bildung von gekrümmten Gliederbandabschnitten 5, wie aus Fig. 4 ersichtlich, gewünschter Länger und damit gewünschten Wuchtgewichtes sowie das Abtrennen der so gebildeten Bandabschnitte von dem Gliederband 1 ermöglicht.

Dieses Abtrennen geschieht mit Hilfe eines geeigneten Werkzeugs, beispielsweise Messers oder einer Schere dadurch, daß die diesbezügliche Schneide in den durch den Abstand A gebildeten Zwischenraum eingreift und das Trägerband 3 einschließlich Schutzfolie durchtrennt, könnte aber auch so erfolgen, falls das Material aus dem Trägerband und Schutzfolie bestehen, dies zuläßt, beispielsweise durch geeignete Perforation, daß das Gliederband an der gewünschten Stelle im Bereich eines Abstandes A von Hand durchtrennt wird, also ohne Werkzeug.

Der Gliederbandabschnitt 5 wird demnach so bemessen, daß das verlangte Wuchtgewicht sich aus der Summe der einzelnen Metallplatten bzw. -plättchen 2 ergibt. Diese Platten oder -plättchen können auch aus Edelstahl oder anderem geeigneten Material bestehen und werden beispielsweise durch Stanzen, Schneiden, Prägen und Gießen hergestellt und auf dem Trägerband 3 beispielsweise appliziert. Darüber hinaus können Größe und Form der Metallplatten bzw. -plättchen 2 auch variieren, um unterschiedliche Wuchtgewichte zu erhalten.

Die in der Zeichnung als gleich groß dargestellten Glieder des Gliederbandes können auch verschiedenen Größe und damit unterschiedliches Gewicht aufweisen, wie auch ihr gegenseitiger Abstand A zwar in aller Regel gleich ist, jedoch, falls es die Umstände erfordern, unterschiedlich groß sein kann, wobei die Abstände der einzelnen Glieder bzw. Metallplatten oder -plättchen voneinander in Trägerbandlängsrichtung zur Länge L der Glieder in einem Verhältnis von etwa 1,0 : 10 stehen.

Es versteht sich, daß anstelle eines beidseitig mit einem Kleber versehenen Trägerbandes 3, das beispielsweise aus einem textilen oder Kunststoffmaterial besteht, auch ein anderes elastisches Trägerband denkbar ist, und daß die Befestigung der Glieder oder Metallplatten bzw. -plättchen auf der Trägerbandoberfläche auch auf andere Weise, beispielsweise mechanisch durch Aufnieten oder Umbördeln bzw. mechanisches Verformen des Trägerbandes mit der Oberfläche der metallenen Glieder erfolgen könnte. Wichtig ist in jedem Fall, daß die Anpaßbarkeit der Gliederbandabschnitte 5 an vorhandene gekrümmte Felgen- oder Radoberflächen gewährleistet ist, um die Auswuchtgewichte auf diesen Oberflächen möglichst dauerhaft befestigen zu können.

## Patentansprüche

1. Wuchtgewichtstrang zum Auswuchten von Fahrzeugrädern und Felgen, bestehend aus mehreren selbstklebenden, metallischen Auswuchtgewichten, **dadurch gekennzeichnet, daß** der Strang als Gliederband (1) ausgebildet ist, bestehend aus auf einem Trägerband (3) aufeinanderfolgend angebrachten separaten Metallplatten oder -plättchen (2), deren Breite (B) und Länge (L) wesentlich größer sind als ihre Dicke (D).

2. Wuchtgewichtsstrang nach Anspruch 1, **dadurch gekennzeichnet, daß** die in Gliederbandlängsrichtung aufeinanderfolgenden Metallplatten oder -plättchen (2) einen Mindestabstand (A) voneinander aufweisen, der ihre Beweglichkeit in Bezug aufeinander zur Bildung von gekrümmten Gliederbandabständen (A) gewünschter Länge und damit gewünschten Wuchtgewichtes ermöglicht.

3. Wuchtgewichtsstrang nach Anspruch 2, **dadurch gekennzeichnet, daß** der Mindestabstand (A) so gewählt ist, daß zwischen die aufeinanderfolgenden Metallplatten oder -plättchen (2) zur Schaffung separater Gliederbandabschnitte (5) ein Trennwerkzeug einbringbar ist.

4. Wuchtgewichtsstrang nach einem der Ansprüche 1 bis 3, **dadurch gekennzeichnet, daß** das Trägerband (3) beidseitig mit einem Kleber versehen ist und auf der einen Seite die einzelnen Glieder bzw. Metallplatten oder -plättchen (2) mit Hilfe des Klebers trägt und auf der anderen Seite mit einer den Kleber bedeckenden, abziehbaren Schutzfolie (4) versehen ist, die die Beweglichkeit der einzelnen Glieder (2) in Bezug aufeinander nicht beeinträchtigt.

5. Wuchtgewichtsstrang nach einem der Ansprüche 1 bis 4, **dadurch gekennzeichnet, daß** die einzelnen Glieder bzw. Metallplatten oder -plättchen (2) gleichmäßig beabstandet sind.

6. Wuchtgewichtsstrang nach einem der Ansprüche 1 bis 5, **dadurch gekennzeichnet, daß** die einzelnen Glieder bzw. Metallplatten oder -plättchen (2) gleich groß sind und damit dasselbe Wuchtgewicht aufweisen.

7. Wuchtgewichtsstrang nach einem der Ansprüche 1 bis 6, **dadurch gekennzeichnet, daß** die einzelnen Glieder bzw. Metallplatten oder -plättchen (2) aus Zink oder einer Zinklegierung bestehen.

8. Wuchtgewichtsstrang nach einem der Ansprüche 1 bis 7, **dadurch gekennzeichnet, daß** der Abstand (A) der einzelnen Glieder bzw. Metallplatten oder -plättchen (2) zur Größe der in Trägerbandlängsrichtung gemessenen Länge (L) ca. 1 : 10 beträgt.
